# EUROPÄISCHE PATENTSCHRIFT

(11) **EP 0 558 873 B1**
(45) Veröffentlichungstag und Bekanntmachung des Hinweises auf die Patenterteilung: **17.01.1996**
(21) Anmeldenummer: 92810170.8
(22) Anmeldetag: 05.03.1992
(51) Int. Cl.: G21C 9/004

(54) **Vorrichtung zum Entfernen von Aerosolen aus der Luft eines Kernreaktor-Containments**
Installation for the separation of aerosols contained in the air from a nuclear reactor containment
Installation de séparation des aérosols de l'air provenant d'une enceinte de réacteur nucléaire

(43) Veröffentlichungstag der Anmeldung: 08.09.1993
(73) Patentinhaber: SULZER THERMTEC AG, CH-8401 Winterthur (CH)
(72) Erfinder: Kielbowicz, Stanislaw, CH-8820 Wädenswil (CH)
(74) Vertreter: Hammer, Bruno, Dr.

(56) Entgegenhaltungen:
- EP-A- 0 403 424
- WO-A-88/09039
- WO-A-89/08491
- DE-A- 2 256 766
- DE-A- 2 321 567

## Beschreibung

Die Erfindung bezieht sich auf eine Vorrichtung zum Entfernen von Aerosolen, die in der aus einem Containment einer Kernreaktoranlage im Falle eines Ueberdrucks in diesem Containment entweichenden Luft enthalten sind, wobei die Luft über eine am Containment angeschlossene Leitung einem Wasserbad zugeleitet wird, an die eine Mehrzahl von im Wasserbad angeordneten Düsen angeschlossen ist, oberhalb denen mindestens eine gelochte Prallplatte angeordnet ist, und wobei oberhalb dieser Prallplatte und im Wasserbad ein von einem Mantel umgebenes Paket von statischen Mischelementen angeordnet ist.

In einer bekannten Vorrichtung dieser Art (EP-A-0403 424) gelangt die das Wasserbad verlassende Luft über eine Leitung direkt, ohne weitere Filterstufen, in einen Abluftkamin. Es hat sich gezeigt, dass mit der bekannten Vorrichtung ein Abscheidegrad (auch Dekontfaktor genannt) von ungefähr 1000 erreicht wird. Dieser Faktor stellt das Verhältnis der gesamten Aerosolpartikelkonzentration am Eintritt der Vorrichtung zu derjenigen am Austritt der Vorrichtung dar. Um die Umwelt möglichst wenig zu belasten, ist es jedoch erwünscht, den Abscheidegrad der bekannten Vorrichtung zu erhöhen, was die Aufgabe der Erfindung bildet.

Die erfindungsgemässe Lösung dieser Aufgabe besteht darin, dass oberhalb des Wasserbades und des Paketes eine Trockenabscheidestufe angeordnet ist, die aus einem Eintrittsabscheider und einem Agglomerator besteht, und dass der Eintrittsabscheider und der Agglomerator von der aus dem Paket austretenden Luft nacheinander und in zueinander entgegengesetzter Richtung durchströmt sind.

Durch diese Lösung wird also in der bekannten Vorrichtung der bisherigen Nassabscheidepartie eine Trockenabscheidepartie nachgeschaltet, und zwar innerhalb des selben Behälters, in dem sich die Nassabscheidepartie befindet. Durch das Nachschalten der Trockenabscheidepartie wird der Abscheidegrad auf mindestens 10 000 erhöht, da in dieser Partie auch sehr kleine Aerosolpartikel in der Grösse von Mikrometern zurückgehalten werden.

Weitere, die Erfindung verbessernde Merkmale sind in den Unteransprüchen enthalten.

Ein Ausführungsbeispiel der Erfindung ist in der folgenden Beschreibung anhand der Zeichnung näher erläutert. Es zeigen:
- Fig.1: ein vereinfachtes Schaltschema mit der erfindungsgemässen Vorrichtung,
- Fig.2: einen Vertikalschnitt durch die Vorrichtung,
- Fig.3: eine Draufsicht auf die Düsenanordnung,
- Fig.4: ein Detail der Düsenanordnung und
- Fig.5: einen Längsschnitt durch eine Düse mit drei Prallplatten.

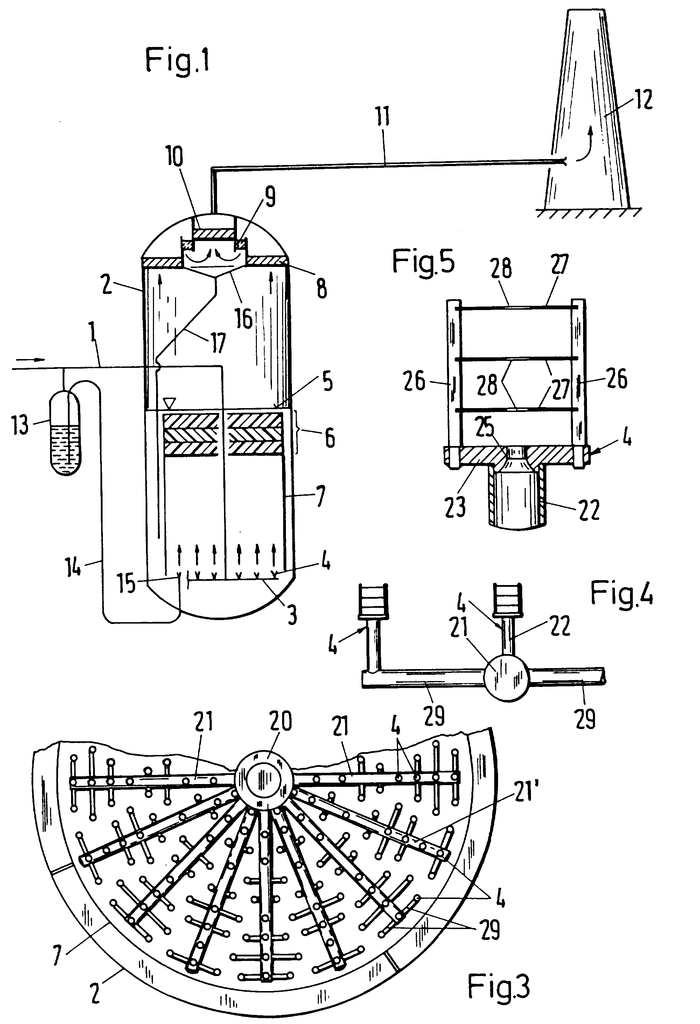

Gemäss Fig.1 ist mit 1 eine Leitung bezeichnet, die mit ihrem in Fig.1 nicht gezeigten Ende an das Innere eines Containments oder Sicherheitsbehälters einer Kernreaktoranlage angeschlossen ist. In dem nicht gezeigten Abschnitt der Leitung 1 sind Containment-Isolationsventile eingebaut, die im Falle eines unzulässigen Ueberdruckes im Containment öffnen. Die Leitung 1 durchdringt einen Behälter 2, der zur Vorrichtung zum Entfernen von Aerosolen aus der über die Leitung 1 zugeführten Luft gehört. Die Leitung 1 ist innerhalb des zylinderischen Behälters 2 in dessen Zentrum nach unten geführt und mündet in ein Verteilsystem 3, auf dem in weiter unten näher beschriebener Weise Düsen 4 angeordnet sind.

Im unteren Teil des Behälters 2 befindet sich ein Wasserbad 5, dessen Niveau etwa auf halber Höhe des Behälters 2 liegt. In der unteren Hälfte des Behälters 2 ist ein Paket 6 aus statischen Mischelementen angeordnet, dass von einem Mantel 7 umgeben ist, der nach unten bis nahe in den Bereich der Düsen 4 reicht. Im Bereich des oberen Endes des Behälters 2 ist ein ringscheibenförmiger Eintrittsabscheider 8 vorgesehen, der von der das Wasserbad 5 verlassenden Luft im wesentlichen von unten nach oben durchströmt wird. In Richtung auf das Zentrum des Behälters 2 folgt dem Eintrittsabscheider 8 ein ringscheibenförmiger Agglomerator 9, der von der den Eintrittsabscheider 8 verlassenden Luft in entgegengesetzter Richtung durchströmt wird. Dem Agglomerator 9 ist ein Austrittsabscheider 10 nachgeschaltet, der sich im Zentrum des Behälters 2 befindet und der von der Luft in gleicher Richtung durchströmt wird wie der Eintrittsabscheider. Am höchsten Punkt des Behälters 2 ist eine Leitung 11 angeschlossen, die die von Aerosolen befreite Luft über einen Kamin 12 in die Atmosphäre entlässt. Unterhalb des Agglomerators 9 befindet sich ein Kondensatsammelbecken 16 mit Abführleitung 17.

An die Leitung 1 ist ein Vorratsbehälter 13 angeschlossen, der flüssiges Natriumthiosulfat enthält. In diese Flüssigkeit taucht das Ende einer oben am Vorratsbehälter 13 austretenden Leitung 14, die den Behälter 2 durchdringt und in eine Düse 15 mündet, die auf der Höhe der Düsen 4 angeordnet, von diesen aber getrennt ist.

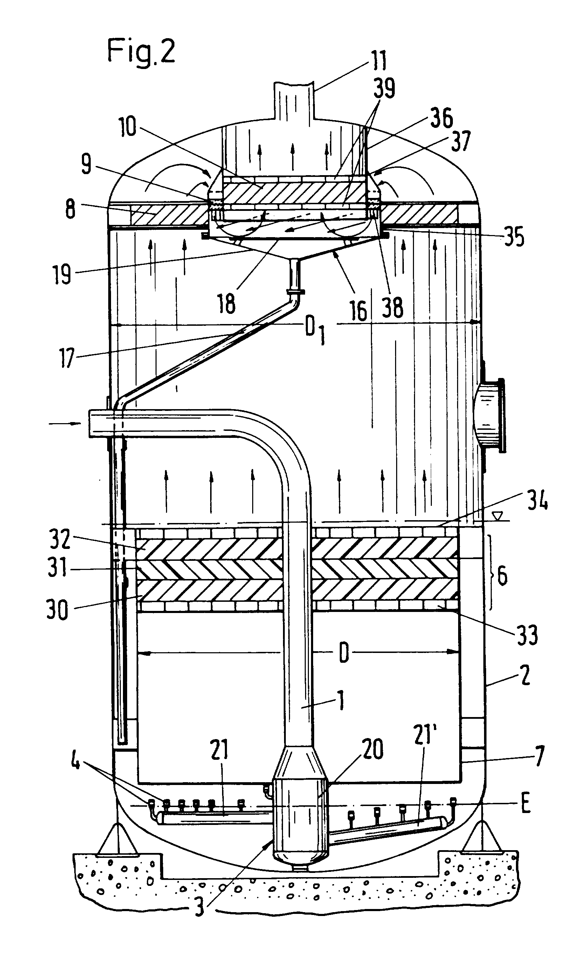

Wie aus Fig.2 und 3 ersichtlich, umfasst das Verteilsystem 3 einen am unteren Ende der Leitung 1 angeschlossenen, kollektorartigen Verteilkopf 20, der an seinem unteren Ende verschlossen ist und mit diesen Ende am Boden des Behälters 2 abgestützt ist. Vom Verteilkopf 20 gehen radial nach aussen sich erstreckende Verteilarme 21 und 21' aus, von denen die Verteilarme 21 horizontal und die Verteilarme 21' leicht geneigt aufwärts verlaufen. Hierdurch lassen sich die Anschlussstellen der Verteilarme 21 und 21' am Verteilkopf 20 so anordnen, dass keine unzulässige Schwächung der Wand des Verteilkopfes auftritt. Ueber die Länge der Verteilarme 21 verteilt, sind Düsen 4 angeordnet, die - wie Fig.4 und 5 zeigen - aus einem vertikalen Rohrabschnitt 22 und einer auf diesen aufgeschweissten Platte 23 mit einem sich nach oben verjüngernden Düsenloch 25 bestehen. Die Rohrabschnitte 22 sind mit ihrem unteren Ende am Verteilarm 21 angeschweisst. An der Platte 23 sind drei nach oben ragende vertikale Stangen 26 angeschweisst (in Fig.5 sind nur zwei Stangen gezeichnet), zwischen denen drei Prallplatten 27 befestigt sind. Die drei Prallplatten 27 weisen je ein zentrales, mit dem Düsenloch 25 fluchtendes Loch 28 auf, von denen das in der untersten Platte 27 den kleinsten Durchmesser aufweist; in den darüberliegenden Prallplatten nimmt der Lochdurchmesser zu. Düsen der beschriebenen Art sind im Behälter 2 auch zwischen den Verteilarmen 21 und 21' vorhanden, und zwar indem an den Verteilarmen 21 quer zu ihnen verlaufende Verteilfinger 29 (Fig.4) angeschlossen sind, die an ihrem Ende mit je einer Düse 4 versehen sind. In gleicher Weise, wie für die Verteilarme 21 beschrieben, sind auch an den Verteilarmen 21' Düsen 4 mit vertikalen Rohrabschnitten 22 angeordnet.

Gemäss Fig.2 besteht das Paket 6 aus statischen Mischelementen aus drei Schichten 30, 31 und 32. Die Mischelemente aller drei Schichten bestehen in bekannter Weise aus gewelltem oder geriffeltem Flachmaterial, z.B. aus Metallblech. Sie sind so aufgebaut, dass sich zwischen ihnen definierte offene, sich kreuzende Strömungskanäle ergeben. Der detailierte Aufbau solcher Mischelemente ist z.B. in der CH-PS 547 120 beschrieben. Bei dem Paket 6 sind die Mischelemente der unteren Schicht 30 und der oberen Schicht 32 in ihrem Aufbau etwas gröber dimensioniert als die Mischelemente der mittleren Schicht 31, dass heisst die Querschnitte der Strömungskanäle in den Schichten 30 und 32 sind etwas grösser dimensioniert als in der mittleren Schicht 31. Das Paket 6 ist zwischen einer unteren Lochplatte 33 und einer oberen Lochplatte 34 im Mantel 7 gehalten. Die Höhe des Raumes zwischen den Düsen 4 - die Ebene, in der die Düsen 4 im Mittel liegen, ist durch die strichpunktiert dargestellte Linie E in Fig.2 definiert - und dem Eintritt des Paketes 6 beträgt im Minimum 0,25 D, wobei D der Innendurchmesser des Mantels 7 ist. Die Höhe dieses Raumes soll nicht mehr als gleich D betragen.

Der Eintrittsabscheider 8 im oberen Bereich des Behälters 2 ist aus einer Schicht statischer Mischelemente aufgebaut, und zwar wie die Schicht 30 oder 31 des Paketes 6. Der Innendurchmesser des Eintrittsabscheiders 8 wird durch einen Rohrabschnitt 35 begrenzt, der einen Teil des Sammelbeckens 16 bildet. Das Sammelbecken 16 wird nach unten durch einen flachen Trichter 19 begrenzt, an dessen tiefster Stelle die Kondensatleitung 17 angeschlossen ist. Innerhalb des Sammelbeckens 16, und zwar auf der Höhe des oberen Endes des Trichters 19 ist eine horizontale Platte 18 angeordnet, die sich über mehrere Füsse am Trichter 19 abstützt und die zwischen ihrem äusseren Rand und dem Trichter einen vertikalen Abstand aufweist. Koaxial zum Rohrabschnitt 35 ragt in das Sammelbecken 16 von oben her ein Rohrabschnitt 36, der mit seinem oberen Ende an der Decke des Behälters 2 dicht befestigt ist. Zwischen den Rohrabschnitten 35 und 36 ist auf diese Weise ein Ringspalt gebildet, in dem der Agglomerator 9 angeordnet ist. Der Agglomerator 9 besteht aus zwei Schichten von statischen Mischelementen, die jedoch nicht aus Flachmaterial, sondern aus Drahtgewebe aufgebaut sind. Oberhalb des Agglomerators sind zwischen den Rohrabschnitten 35 und 36 radial-axiale Blechstege 37 befestigt, die als Leitflächen für die in den Agglomerator 9 einströmende Luft dienen. In Strömungsrichtung unterhalb des Agglomerators 9 sind schaufelartige Leitbleche 38 am Rohrabschnitt 36 befestigt, die zur Vertikalen geneigt verlaufen und dadurch der aus dem Agglomerator 9 austretenden Luft eine Drallströmung um die vertikale Achse des Sammelbeckens 16 erteilen. Innerhalb des Rohrabschnittes 36 ist der Austrittsabscheider 10 angeordnet, der wie der Eintrittsabscheider 8 aus statischen Mischelementen des Blechtyps aufgebaut ist. Ähnlich wie beim Paket 6 sind die statischen Mischelemente des Austrittsabscheiders 10 zwischen zwei Lochblechen 39 gehalten. Wie aus Fig.2 ersichtlich, sind die Strömungsquerschnitte des Eintrittsabscheiders 8 und des Austrittsabscheiders 10 einerseits und des Agglomerators 9 andererseits sehr verschieden, und zwar ist letzterer wesentlich kleiner als der Querschnitt der Abscheider 8 und 10. Der Abstand zwischen dem Austritt des Paketes 6 und dem Eintritt in den Eintrittsabscheider 8 beträgt im Minimum 0,8 D₁, wobei D₁ der Innendurchmesser des Behälters 2 ist.

Die beschriebene Einrichtung arbeitet wie folgt. Im Fall, dass im Containment ein unzulässiger Ueberdruck auftritt, z.B. in folge eines Schmelzens des Reaktorkerns, öffnen die oben erwähnten Containment-Isolationsventile in der Leitung 1. Mit Aerosolen, wie Wasserdampf, Kohlendioxyd, Wasserstoff, Jod usw., beladene Luft aus dem Containment strömt dann über die Leitung 1 in den Verteilkopf 20, von wo aus sie über die Verteilarme 21 und 21' und gegebenenfalls die Verteilfinger 29 in die Düsen 4 gelangt. Die aus den Düsenlöchern 25 austretende Luft reisst Wasser aus der Umgebung mit und mischt sich intensiv beim Durchströmen der Löcher 28 in den nachgeschalteten Prallplatten 27. Das so gebildete Wasser-Luft-Gemisch strömt dann weiter aufwärts und tritt über das Lochblech 33 in die statischen Mischelemente des Paketes 6. In den sich kreuzenden Strömungskanälen der Mischelemente findet ein fortlaufendes Aufspalten, Ausdehnen und Umlagern der Komponenten des Wasser-Luft-Gemisches statt, wobei die Luft, die die Aerosole mitschleppt, im Wasser dispergiert wird. Die Aerosole werden aus der Luft an das Wasser oder an den Mischelementen abgeschieden. Am oberen Ende des Paketes 6 tritt die von dem grössten Teil der Aerosole befreite Luft aus der Nasspartie der Vorrichtung aus und strömt dann aufwärts weiter zur im oberen Teil des Behälters 2 befindlichen Trockenpartie. Die in dieser aufwärtsströmenden Luft noch enthaltenen Aerosole liegen in Form von sehr feinen Wassertröpfchen vor, die die zurückzuhaltenden Stoffe enthalten. Der Durchmesser der Tröpfchen liegt im Mikrometerbereich. Um diese Tröpfchen auch noch aus der Luft zu entfernen, durchströmt die Luft zunächst den Eintrittsabscheider 8 im wesentlichen von unten nach oben. Nach dem Austreten der Luft aus dem Eintrittsabscheider 8 wird diese an der gewölbten Decke des Behälters 2 in die Gegenrichtung umgelenkt und durchströmt dann den Agglomerator 9. Beim Austreten der Luft aus dem Agglomerator 9 erhält diese durch die Leitbleche 38 einen Drall, so dass sich im Sammelbecken 16 eine rotierende Luftströmung ergibt. Hierdurch werden die Tröpfchen durch Zentifugalkraft gegen den Rohrabschnitt 35 des Sammelbeckens 16 geschleudert. Die dabei ausgeschiedenen Tröpfchen fliessen als Kondensat im Trichter 19 zur Abführleitung 17, über die sie dann in das Wasserbad 5 zurückgeleitet werden. Die auf diese Weise von den Tröpfchen befreite Luft wird dann nach oben umgelenkt und durchströmt den Austrittsabscheider 10, in dem nochmals Aerosoltröpfchen zurückgehalten werden. Die aus dem Austrittsabscheider 10 austretende, sehr reine Luft gelangt dann über die Leitung 11 direkt zum Kamin 12. Durch den erwähnten Abstand zwischen den Düsen 4 und dem Paket 6 sowie mit dem Austrittsabscheider 10 in der Trockenpartie wird mit Hilfe der beschriebenen Vorrichtung ein Abscheidegrad von etwa 100 000 erreicht.

Mit dem Oeffnen der Containment-Isolationsventile und dem Einströmen der Luft in das Verteilsystem 3 tritt auch Luft in den Vorratsbehälter 13 ein, so dass Natriumthiosulfat aus diesem Behälter über die Leitung 14 zur Düse 15 gelangt. Das Natriumthiosulfat wird in das Wasserbad 5 eingedüst, um in der Luft mitgeführtes Jod zu binden. Mit Hilfe von Soda wird der pH-Wert des Wassers auf 10-11 eingestellt.

Abweichend von dem beschriebenen Ausführungsbeispiel kann das Niveau des Wasserbades 5 auch tiefer als gezeichnet liegen, so dass das Paket 6 sich nur teilweise im Wasser oder ganz ausserhalb des Wassers befindet.

Der ringscheibenförmig ausgebildete Eintrittsabscheider 8 kann sich aus nebeneinandergereihten Paketen von statischen Mischelementen zusammensetzen, wobei jedes dieser Pakete einen Ringsektor bildet. Ein gleicher Aufbau ist auch für den ringscheibenförmigen Agglomerator 9 möglich.

## Patentansprüche

1. Vorrichtung zum Entfernen von Aerosolen, die in der aus einem Containment einer Kernreaktoranlage im Falle eines Ueberdrucks in diesem Containment entweichenden Luft enthalten sind, wobei die Luft über eine am Containment angeschlossene Leitung (1) einem Wasserbad (5) zugeleitet wird, an die eine Mehrzahl von im Wasserbad angeordneten Düsen (4) angeschlossen ist, oberhalb derer mindestens eine gelochte Prallplatte (27) angeordnet ist, und wobei oberhalb dieser Prallplate und im Wasserbad ein von einem Mantel (7) umgebenes Paket (6) von statischen Mischelementen (30-32) angeordnet ist, dadurch gekennzeichnet, dass oberhalb des Wasserbades (5) und des Paketes (6) eine Trockenabscheidestufe angeordnet ist, die aus einem Eintrittsabscheider (8) und einem Agglomerator (9) besteht, und dass der Eintrittsabscheider (8) und der Agglomerator (9) von der aus dem Paket (6) austretenden Luft nacheinander und in zueinander entgegengesetzter Richtung durchströmt sind.

2. Vorrichtung nach Anspruch 1, dadurch gekennzeichnet, dass der Eintrittsabscheider (8) und der Agglomerator (9) ringscheibenförmig ausgebildet sind und der Agglomerator vom Eintrittsabscheider umgeben ist.

3. Vorrichtung nach Anspruch 1 oder 2, dadurch gekennzeichnet, dass der Eintrittsabscheider (8) aus statischen Mischelementen aus Blech oder Kunststoff besteht.

4. Vorrichtung nach einem der Ansprüche 1 bis 3, dadurch gekennzeichnet, dass der Agglomerator (9) aus statischen Mischelementen aus Drahtgewebe besteht.

5. Vorrichtung nach einem der Ansprüche 1 bis 4, dadurch gekennzeichnet, dass dem Agglomerator (9) ein Austrittsabscheider (10) nachgeschaltet ist, der von der Luft in entgegengesetzter Richtung zur Strömungsrichtung im Agglomerator durchströmt ist.

6. Vorrichtung nach Anspruch 5, dadurch gekennzeichnet, dass der Austrittsabscheider (10) aus statischen Mischelementen aus Blech oder Kunststoff besteht.

7. Vorrichtung nach einem der Ansprüche 1 bis 6, dadurch gekennzeichnet, dass unterhalb des Agglomerators (9) und des Austrittsabscheiders (10) ein Sammelbecken (16) mit trichterförmigem Boden (19) angeordnet ist, an dessen tiefster Stelle eine in das Wasserbad (5) mündende Leitung (17) angeschlossen ist.

8. Vorrichtung nach Anspruch 7, dadurch gekennzeichnet, dass im Sammelbecken (16) etwa auf der Höhe des oberen Endes des trichterförmigen Bodens eine horizontale Platte (18) angeordnet ist, deren Rand einen Durchlass zum trichterförmigen Boden freilässt.

9. Vorrichtung nach einem der ansprüche 1 bis 8, dadurch gekennzeichnet, dass je Düse (4) mehrere Prallplatten (27) mit je einem zentralen Loch (28) übereinander angeordnet sind.

10. Vorrichtung nach Anspruch 9, dadurch gekennzeichnet, dass die zentralen Löcher (28) in Strömungsrichtung der Luft von Platte zu Platte grösseren Durchmesser aufweisen.

11. Vorrichtung nach einem der Ansprüche 2 bis 10, dadurch gekennzeichnet, dass in Stömungsrichtung der Luft anschliessend an den ringscheibenförmigen Agglomerator (9) über dessen Umfang verteilt drallerteilende Leitbleche (38) vorgesehen sind.

12. Vorrichtung nach einem der Ansprüche 1 bis 11, dadurch gekennzeichnet, dass der vertikale Abstand zwischen den Düsen (4) einerseits und dem Paket (6) andererseits mindestens 0,25 mal dem Innendurchmesser des Mantels (7) beträgt.

13. Vorrichtung nach einem der Ansprüche 1 bis 12, dadurch gekennzeichnet, dass in das Wasserbad (5) eine Natriumthiosulfatzufuhr (14) mündet.

14. Vorrichtung nach Anspruch 13, dadurch gekennzeichnet, dass die Natriumthiosulfatzufuhr einen Vorratsbehälter (13) umfasst, der mit seinem oberhalb des Vorrats befindlichen Abschnitt an die am Containment angeschlossene Leitung (1) angeschlossen ist und der eine Verbindungsleitung (14) aufweist, die mit ihrem einen Ende in den Vorrat eintaucht und mit ihrem anderen Ende im Wasserbad (5) auf der Höhe der Düsen mündet.

## Claims

1. Apparatus for removing aerosols contained in the air escaping from a containment of a nuclear reactor plant in the event of an excess pressure in such containment, the air being fed to a water bath (5), via a line (1) connected to the containment, a plurality of nozzles (4) disposed in the water bath being connected to said line and having at least one perforate baffle plate (27) disposed above them, a set (6) of static mixing elements (30-32) surrounded by a jacket (7) being disposed above said baffle plate and in the water bath, characterised in that a dry separating stage is disposed above the water bath (5) and the set (6) and consists of an entry separator (8) and an agglomerator (9), and in that the entry separator (8) and the agglomerator (9) have the air emerging from the set (6) flowing through them successively and in opposite directions.

2. Apparatus according to claim 1, characterised in that the entry separator (8) and the agglomerator (9) are in the form of annular discs and the agglomerator is surrounded by the entry separator.

3. Apparatus according to claim 1 or 2, characterised in that the entry separator (8) consists of static mixing elements made of sheet-metal or plastics.

4. Apparatus according to any one of claims 1 to 3, characterised in that the agglomerator (9) consists of static mixing elements made from wire netting.

5. Apparatus according to any one of claims 1 to 4, characterised in that the agglomerator (9) is followed by an exit separator (10) through which the air flows the opposite direction to the direction of flow in the agglomerator.

6. Apparatus according to claim 5, characterised in that the exit separator (10) consists of static mixing elements made of sheet-metal or plastics.

7. Apparatus according to any one of claims 1 to 6, characterised in that a collecting trough (16) having a base (19) in the form of a funnel is disposed beneath the agglomerator (9) and the exit separator (10), a line (17) which leads into the water bath (5) being connected to its lowest point.

8. Apparatus according to claim 7, characterised in that a horizontal plate (18) is disposed in the collecting trough (16) substantially at the height of the top end of the funnel-shaped base, and its edge is spaced from the funnel-shaped base so as to leave a passage.

9. Apparatus according to any one of claims 1 to 8, characterised in that a plurality of baffle plates (27) each having a central hole (28) are disposed one above the other for each nozzle (4).

10. Apparatus according to claim 9, characterised in that the central holes (28) have diameters increasing from plate to plate in the direction of flow of the air.

11. Apparatus according to any one of claims 2 to 10, characterised in that swirl-imparting deflectors (38) are provided after the annular-discoid agglomerator (9) as considered in the direction of flow and are distributed over the periphery thereof.

12. Apparatus according to any one claims 1 to 11, characterised in that the vertical distance between the nozzles (4), on the one hand, and the set (6), on the other hand, is at least 0.25 times the inside diameter of the jacket (7).

13. Apparatus according to any one of claims 1 to 12, characterised in that a sodium thiosulphate supply (14) leads into the water bath (5).

14. Apparatus according to claim 13, characterised in that the thiosulphate supply comprises a reservoir (13), whose portion situated above the supply is connected to the line (1) connected to the containment, and which has a connecting line (14), one end of which is immersed in the supply and the other end of which leads into the water bath (5) at the level of the nozzles.

## Revendications

1. Dispositif pour éliminer des aérosols contenus dans l'air s'échappant de l'enceinte d'une installation de réacteur nucléaire en cas de surpression dans cette enceinte, l'air étant envoyé dans un bain d'eau (5) par l'intermédiaire d'une conduite (1) qui est reliée à l'enceinte et à laquelle est reliée une pluralité de buses (4) qui sont disposées dans le bain d'eau et au-dessus desquelles se trouve au moins une plaque de déviation perforée (27), et un empilement (6) d'éléments composés statiques (30 à 32) entouré par une enveloppe (7) étant disposé au-dessus de cette plaque de déviation et dans le bain d'eau, caractérisé en ce que, au-dessus du bain d'eau (5) et de l'empilement (6), il est prévu un étage de séparation par voie sèche constitué d'un séparateur d'entrée (8) et d'un agglomérateur (9), et en ce que le séparateur d'entrée (8) et l'agglomérateur (9) sont parcourus successivement et dans des directions opposées l'une à l'autre par l'air sortant de l'empilement (6).

2. Dispositif selon la revendication 1, caractérisé en ce que le séparateur d'entrée (8) et l'agglomérateur (9) sont de forme annulaire, et l'agglomérateur est entouré par le séparateur d'entrée.

3. Dispositif selon la revendication 1 ou 2, caractérisé en ce que le séparateur d'entrée (8) est constitué d'éléments composés statiques en tôle ou en matière plastique.

4. Dispositif selon l'une des revendications 1 à 3, caractérisé en ce que l'agglomérateur (9) est constitué d'éléments composés statiques en treillis métallique.

5. Dispositif selon l'une des revendications 1 à 4, caractérisé en ce qu'en aval de l'agglomérateur (9) est disposé un séparateur de sortie (10) qui est traversé par l'air dans la direction opposée à la direction d'écoulement dans l'agglomérateur.

6. Dispositif selon la revendication 5, caractérisé en ce que le séparateur de sortie (10) est constitué d'éléments composés statiques en tôle ou en matière plastique.

7. Dispositif selon l'une des revendications 1 à 6, caractérisé en ce que, en dessous de l'agglomérateur (9) et du séparateur de sortie (10), est disposé un bac collecteur (16) dont le fond (19) est en forme d'entonnoir et dont le point le plus bas est relié à une conduite (17) débouchant dans le bain d'eau (5).

8. Dispositif selon la revendication 7, caractérisé en ce que, dans le bac collecteur (16), sensiblement à la hauteur de l'extrémité supérieure du fond en entonnoir, est disposée une plaque horizontale (18) dont le bord définit un passage par rapport au fond en entonnoir.

9. Dispositif selon l'une des revendications 1 à 8, caractérisé en ce que, dans chaque buse (4), plusieurs plaques de déviation (27) comportant chacune un trou central (28) sont superposées.

10. Dispositif selon la revendication 9, caractérisé en ce que les trous centraux (28) présentent un diamètre qui augmente d'une plaque à l'autre dans la direction d'écoulement de l'air.

11. Dispositif selon l'une des revendications 2 à 10, caractérisé en ce que, dans la direction d'écoulement de l'air, des déflecteurs (38) produisant un mouvement de rotation sont prévus dans le prolongement de l'agqlomérateur (9) de forme annulaire et répartis sur la périphérie de celui-ci.

12. Dispositif selon l'une des revendications 1 à 11, caractérisé en ce que l'intervalle vertical entre les buses (4), d'une part, et l'empilement (6), d'autre part, est au moins égal à 0,25 fois le diamètre intérieur de l'enveloppe (7).

13. Dispositif selon l'une des revendications 1 à 12, caractérisé en ce qu'un dispositif d'alimentation (14) en thiosulfate de sodium débouche dans le bain d'eau (5).

14. Dispositif selon la revendication 13, caractérisé en ce que le dispositif d'alimentation en thiosulfate de sodium comporte un réservoir (13) dont la portion située au-dessus de la réserve est raccordée à la conduite (1) reliée à l'enceinte et qui comporte une conduite de liaison (14) dont l'une des extrémités plonge dans la réserve et dont l'autre extrémité débouche dans le bain d'eau (5) à la hauteur des buses.
